# EUROPÄISCHE PATENTSCHRIFT

(11) **EP 2 314 403 B1**
(45) Veröffentlichungstag und Bekanntmachung des Hinweises auf die Patenterteilung: **12.08.2015**
(21) Anmeldenummer: 10187606.8
(22) Anmeldetag: 14.10.2010
(51) Int. Cl.: B23B 31/02, B23B 31/30

(54) **Spanneinrichtung**
Clamping device
Dispositif de tension

(30) Priorität: 26.10.2009 DE 102009050701
(43) Veröffentlichungstag der Anmeldung: 27.04.2011
(73) Patentinhaber: Schunk GmbH & Co. KG Spann- und Greiftechnik, 74348 Lauffen (DE)
(72) Erfinder: Retzbach, Thomas, 74357, Bönnigheim (DE)
(74) Vertreter: Albrecht, Ralf

(56) Entgegenhaltungen:
- EP-A2- 1 080 832
- DE-A1- 19 736 741
- DE-B3-102005 055 622
- JP-A- 10 113 805
- US-A1- 2006 115 337
- US-A1- 2007 053 758
- US-B1- 6 568 883

## Beschreibung

Die vorliegende Erfindung betrifft eine Spanneinrichtung nach dem Oberbegriff von Anspruch 1.

Eine solche Spanneinrichtung ist aus US 2006/0115337 bekannt.

Spanneinrichtungen dieser Art sind bekannt und werden in der Praxis insbesondere eingesetzt, um ein Werkzeug wie beispielsweise ein Fräs- oder Bohrwerkzeug an der Arbeitsspindel einer entsprechenden Werkzeugmaschine zu fixieren. Hierzu wird der Schaft des zu spannenden Werkzeugs in die zentrale Aufnahme eingesetzt und festgespannt. Dabei kann der Werkzeugschaft in der zentralen Aufnahme der Spanneinrichtung in einfacher Weise durch einen Schrumpfsitz fixiert werden. Alternativ ist es auch möglich, die Spanneinrichtung mit einem zusätzlichen Spannsystem wie beispielsweise einem Dehnspannmechanismus zu versehen. In diesem Fall ist in den Grundkörper unter Bildung einer geschlossenen Grundkammer eine Dehnbüchse eingesetzt, wobei die Druckkammer unter elastischer Verformung der Dehnbüchse mit einem Hydraulikmittel beaufschlagbar ist, um eine Spannwirkung zu erzielen.

Weiterhin sind sogenannte Spannzangenfutter bekannt (DE-A-1 141 157, DE 36 15 743 A1). Bei diesen erfolgt die Fixierung eines Bauteils in der Aufnahme über eine Spannzange, die über eine Schrägfläche durch eine hydraulisch verschiebbare Spannhülse nach innen gegen ein zu fixierendes Werkzeug gedrückt wird.

Um die Fertigungsqualität zu erhöhen, gehen die Bestrebungen dahin, die Rundlaufgenauigkeiten bei den Spanneinrichtungen weiter zu verbessern. Zu diesem Zweck ist es bekannt, Ausrichtvorrichtungen vorzusehen, über welche die werkzeugspannende Seite eines Werkzeughalters gegenüber dem in der Arbeitsspindel einer Maschine eingespannten Teils elastisch verbogen werden kann.

Bei einem Werkzeughalter, der aus der US 5,286,042 A bekannt ist, ist die werkzeugspannende Seite von der in der Arbeitsspindel einzuspannenden Seite durch einen ringförmigen Einstich getrennt und kann die werkzeugspannende Seite durch mehrere Stellschrauben, die axial in einen Flansch an der werkzeugspannenden Seite gegen einen Anschlag der eingespannten Seite eingeschraubt werden, verbogen werden.

Des weiteren ist aus der EP 1 080 832 B1 ein Werkzeughalter bekannt, bei welchem die werkzeugspannende Seite von der in die Arbeitsspindel eingespannten Seite durch eine Ringnut getrennt ist. Bei diesem Werkzeughalter ist ein Ring auf den Werkzeughalterschaft im Bereich der umlaufenden Ringnut eingebracht. In diesem Ring sind gleichmäßig über den Umfang verteilt Bohrungen vorgesehen, in welche Stellschrauben eingeschraubt sind, welche auf eine schräge Fläche des Einstichs wirken, um die werkzeugspannende Seite mit der Aufnahme zu verbiegen.

Schließlich ist in der DE 36 36 581 C2 eine Spanneinrichtung der eingangs genannten Art beschrieben, bei welcher in den Futterkörper von außen radiale Kegelschrauben eingedreht werden können, um den Futterkörper im Bereich der Aufnahme zu verbiegen.

Eine Spanneinrichtung der eingangs genannten Art ist aus der US 2006/0115337 bekannt. Diese Spanneinrichtung besitzt einen Grundkörper, in welchen eine Spannhülse eingesetzt ist. Die Spannhülse besteht aus einem Federstahl oder dergleichen und kann mittels einer in dem Grundkörper gehaltenen Klemmmutter radial zusammengedrückt werden, um einen in die Spannhülse eingesetzten Werkzeugschaft zu spannen.

Um einen gespannten Werkzeugschaft ausrichten zu können, sind in dem Grundkörper radiale Gewindebohrungen ausgebildet, welche die Wandung des Grundkörpers durchgreifen und in die zentrale Bohrung des Grundkörpers münden. In die Gewindebohrungen sind Stellschrauben eingedreht, die gegen einen gespannten Werkzeugschaft drücken und diesen verformen, um den Rundlauf zu beeinflussen.

Aufgabe der Erfindung ist es, eine Spanneinrichtung der eingangs genannten Art anzugeben, mit welcher Rundlaufungenauigkeiten mit geringem Aufwand ausgeglichen werden können.

Diese Aufgabe ist durch die Merkmale des Anspruchs 1 gelöst, wobei die Gewindebohrungen in den axial inneren Endbereich der Aufnahme axial beabstandet von dem Spannbereich münden. Es hat sich herausgestellt, dass durch die erfindungsgemäß zur Verfügung stehenden Hebel die Rundlaufgenauigkeit einfach eingestellt werden kann.

In an sich bekannter Weise können die Gewindebohrungen gleichmäßig entlang des Umfangs der Aufnahme verteilt ausgebildet sein. Dabei ist gemäß einer Ausführungsform der Erfindung vorgesehen, dass insgesamt zwei einander diametral gegenüberliegende Gewindebohrungen in dem Grundkörper ausgebildet sind. Diese Ausgestaltung bietet die Möglichkeit, ein gespanntes Bauteil in einer Richtung, die durch die Achse der Gewindebohrungen definiert ist, auszurichten. Insbesondere wird die Möglichkeit geschaffen, auch einen Schaft in der durch die Achse der Gewindebohrungen sowie die Achse der Aufnahme definierte Ebene zu kippen. Auf diese Weise ist es u.a. möglich, das gespannte Werkzeug in einer definierten Weise schräg zu stellen.

Bei einer bevorzugten Ausführungsform der Erfindung sind vier Gewindebohrungen in dem Grundkörper ausgebildet, die mit einem Versatz von 90° gegeneinander angeordnet sind. Damit werden zwei zueinander senkrecht stehende Ebenen definiert, in denen der Rundlauf eingestellt werden kann.

Zweckmäßigerweise liegen die Gewindebohrungen alle auf gleicher axialer Höhe. Alternativ ist es möglich, nur jeweils einen Teil der Gewindebohrungen und hier insbesondere Paare von einander diametral gegenüberliegenden Gewindebohrungen auf gleicher axialer Höhe anzuordnen.

Beispielsweise kann die Spanneinrichtung als Hydrodehnspannfutter ausgebildet sein. In diesem Fall ist in dem Grundkörper eine Dehnhülse vorgesehen, die über ihre Länge zumindest einen axialen Abschnitt der Aufnahme definiert und von einer Druckkammer umgeben wird, in welcher ein Druck aufgebaut werden kann, um die Dehnbüchse in einem den Spannbereich definierenden dünnen Wandabschnitt nach innen zu verformen. Bei einer solchen Ausgestaltung münden die Gewindebohrungen in die Aufnahme an einem zu dem dünnwandigen Abschnitt beabstandeten Bereich. Dabei können die Gewindebohrungen einen zu dem dünnwandigen Abschnitt benachbarten Endbereich der Dehnhülse durchgreifen. Bei einer alternativen Ausführungsform ist vorgesehen, dass die Dehnhülse nur einen axialen Teilabschnitt der Aufnahme definiert und die Gewindebohrungen in einem zu der Dehnhülse axial benachbarten Abschnitt der Aufnahme münden.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:

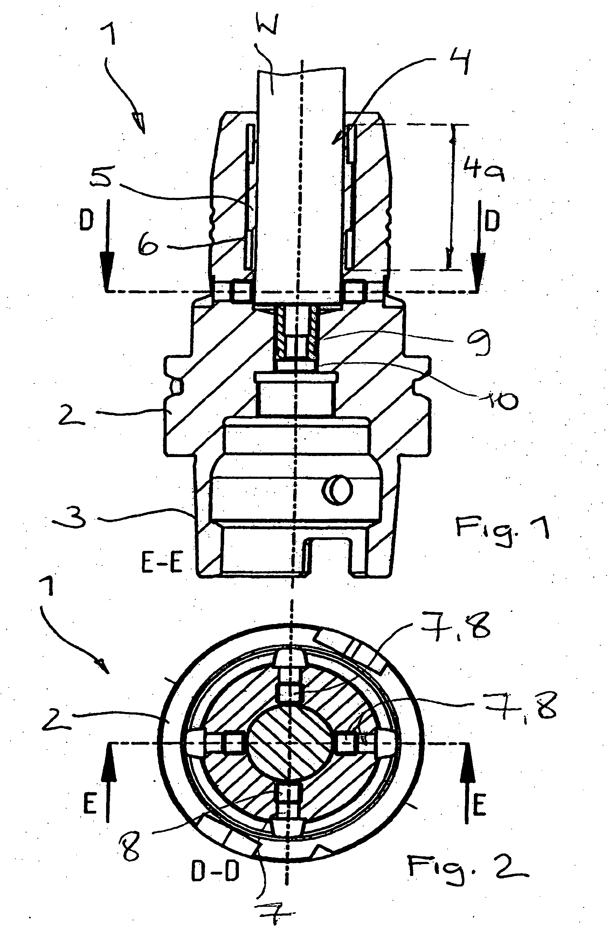

- Figur 1: im Längsschnitt eine als Dehnspannfutter ausgebildete Spanneinrichtung gemäß der vorliegenden Erfindung mit gespanntem Werkzeug und
- Figur 2: das Dehnspannfutter im Schnitt entlang der Linie D-D in Figur 1.

In der Zeichnung ist eine Ausführungsform einer als Dehnspannfutter 1 ausgebildeten Dehnspanneinrichtung gemäß der vorliegenden Erfindung dargestellt. Das Dehnspannfutter 1 umfasst einen Grundkörper 2 aus einem formsteifen Material, der an seinem in der Zeichnung unteren Endbereich in an sich bekannter Weise einen Befestigungskonus 3 zur Einspannung an einer drehangetriebenen Arbeitsspindel einer Werkzeugmaschine aufweist. An dem gegenüberliegenden axialen Ende ist in dem Grundkörper 2 eine zentrale Aufnahme 4 ausgebildet, in die ein zylindrischer Schaft W eines zu spannenden Bauteils, insbesondere der Schaft W eines Werkzeugs wie beispielsweise eines Bohrers oder Fräsers eingeschoben werden kann. Die Aufnahme 4 wird über einen axialen Teilabschnitt 4a - den Spannbereich - außenseitig von einer dünnwandigen Dehnbüchse 5 begrenzt, die hier einteilig mit dem Grundkörper 2 ausgebildet ist, alternativ aber auch ein separates Bauteil sein kann, das mit dem Grundkörper 2 fest verbunden ist. Die Dehnbüchse 5 ist von einer Druckkammer 6 umgeben. Diese ist mit einem Hydraulikmittel wie beispielsweise Öl befüllt und steht über einen im Grundkörper 2 ausgebildeten, in der Zeichnung nicht gezeigten Kanal mit einer Hydraulikmittelquelle in Verbindung, durch die sie zum Spannen eines Bauteils mit Druck beaufschlagt werden kann.

Wie in der Zeichnung gut erkennbar ist, münden in den spindelseitigen Endbereich der Aufnahme 4, der benachbart zu dem von der Dehnhülse 5 definierten Spannbereich 4a ist, insgesamt vier um 90° gegeneinander versetzt angeordnete radiale Gewindebohrungen 7, die in dem Grundkörper 2 ausgebildet sind. In diese Gewindebohrungen 7 sind Stellschrauben 8 eingedreht, so dass sie an dem in der Aufnahme 4 gespannten Schaft W anliegen. Durch gezieltes Festziehen der Stellschrauben 8 können Radialkräfte auf den Schaft W ausgeübt werden, um den Rundlauf zu korrigieren bzw. einzustellen.

Zur axialen Positionierung des Schafts W in der Aufnahme 4 ist ein Anschlagbolzen 9 vorgesehen, der in eine in die spindelseitige Stirnfläche der Aufnahme 4 mündende Bohrung 10 des Grundkörpers 2 eingeschraubt ist.

## Patentansprüche

1. Spanneinrichtung mit einem Grundkörper (2), einer an einem axialen Endbereich des Grundkörpers (2) vorgesehenen Aufnahme (4) für ein zu spannendes Bauteil (W), und Spannmitteln (5, 6), um ein Bauteil (W) in der Aufnahme (4) zu fixieren, wobei in dem Grundkörper (2) mehrere Gewindebohrungen (7) entlang des Umfangs der Aufnahme (4) verteilt ausgebildet sind, in die Stellschrauben (8) zur Aufrichtung eines gespannten Bauteils (W) eingeschraubt oder einschraubbar sind, wobei die radialen Gewindebohrungen (7) als Durchgangsbohrungen ausgebildet sind, welche in die Aufnahme (4) axial beabstandet von einem durch die Spannmittel (5, 6) definierten Spannbereich (4a) derart münden, dass die eingedrehten Stellschrauben (8) in unmittelbaren Kontakt mit einem gespannten Bauteil (W) kommen, **dadurch gekennzeichnet, dass** die Gewindebohrungen (7) in den axial inneren Endbereich der Aufnahme (4) axial beabstandet von dem Spannbereich (4a) münden.

2. Spanneinrichtung nach Anspruch 1, **dadurch gekennzeichnet, dass** die Gewindebohrungen (7) gleichmäßig entlang des Umfangs der Aufnahme (4) verteilt ausgebildet sind.

3. Spanneinrichtung nach Anspruch 2, **dadurch gekennzeichnet, dass** insgesamt vier Gewindebohrungen (7) mit einem Versatz von 90° gegeneinander in dem Grundkörper (2) ausgebildet sind.

4. Spanneinrichtung nach Anspruch 2, **dadurch gekennzeichnet, dass** insgesamt zwei einander diametral gegenüberliegende Gewindebohrungen in dem Grundkörper ausgebildet sind.

5. Spanneinrichtung nach einem der vorherigen Ansprüche, **dadurch gekennzeichnet, dass** mehrere Gewindebohrungen (7), und insbesondere wenigstens ein Paar voneinander diametral gegenüberliegenden Gewindebohrungen (7) auf gleicher axialer Höhe in dem Grundkörper (2) ausgebildet sind.

6. Spanneinrichtung nach einem der vorherigen Ansprüche, **dadurch gekennzeichnet, dass** in dem Grundkörper (2) eine Dehnhülse (5) vorgesehen ist, die über ihre Länge zumindest einen axialen Abschnitt der Aufnahme (4) definiert und von einer Druckkammer (6) umgeben wird, in welcher ein Druck aufgebaut werden kann, um die Dehnbüchse (5) in einem den Spannbereich (4a) definierenden dünnen Wandabschnitt nach innen zu verformen, wobei die Gewindebohrungen (7) in die Aufnahme (4) an einem zu dem dünnwandigen Abschnitt beabstandeten Bereich münden.

7. Dehnspanneinrichtung nach Anspruch 6, **dadurch gekennzeichnet, dass** die Gewindebohrungen (7) einen zu dem dünnwandigen Abschnitt benachbarten Endbereich der Dehnhülse durchgreifen.

8. Dehnspanneinrichtung nach Anspruch 6, **dadurch gekennzeichnet, dass** die Dehnhülse (5) einen axialen Teilabschnitt der Aufnahme (4) definiert und die Gewindebohrungen (7) in einen zu der Dehnhülse (5) axial benachbarten Abschnitt der Aufnahme (4) münden.

9. Dehnspanneinrichtung nach einem der vorherigen Ansprüche, **dadurch gekennzeichnet, dass** die Gewindebohrungen (7) zylindrisch ausgebildet sind.

## Claims

1. Chucking device comprising a base body (2), a receptacle (4) for a component (W) to be clamped provided on an axial end section of the base body (2) and clamping means (5, 6) for a fixing the component (W) in the receptacle (4), wherein several threaded holes (7) are formed in the base body (2) along the circumference of the receptacle (4), into which adjustments screws (8) are screwed or screwable for adjusting the clamped component (W), wherein the radial threaded holes (7) are formed as through holes, that lead into the receptacle (4) with an axial distance from a clamping section (4a) defined by the clamping means (5, 6) in such a way, that the turned in adjustment screws (8) come into direct contact with the clamped component (W), **characterized in that** the threaded holes (7) lead into the axially inner end section of the receptacle (4) with axial distance from the clamping section (4a).

2. Chucking device according to claim 1, **characterized in that** the threaded holes (7) are uniformly distributed along the circumference of the receptacle (4).

3. Chucking device according to claim 2, **characterized in that** in total four threaded holes (7) are formed in the base body (2) with an offset of 90°.

4. Chucking device according to claim 2, **characterized in that** in total two threaded holes are provided in the base body on diametrically opposite sides.

5. Chucking device according to any proceeding claim, **characterized in that** several threaded holes (7) and in particular at least one pair of threaded holes (7), on diametrically opposite sides, are formed on the same axial level in the base body (2).

6. Chucking device according to any proceeding claim, **characterized in that** an expansion sleeve (5) is provided in the base body (2), which defines along its length at least an axial section of the receptacle (4) and is surrounded by a pressure chamber (6), in which a pressure can be built up in order to deform inwardly the expansion sleeve (5) in a thin-walled section defining the clamping section (4a), wherein the threaded holes (7) lead into the receptacle (4) in a section which is spaced apart from the thin-walled section.

7. Chucking device according to claim 6, **characterized in that** the threaded holes (7) pass through an end section of the expansion sleeve neighbouring the thin-wall section.

8. Chucking device according to claim 6, **characterized in that** the expansion sleeve (5) defines an axial part section of the receptacle (4) and the threaded holes (7) lead into a section of the receptacle (4) axially neighbouring the receptacle (4).

9. Chucking device according to any proceeding claim, **characterized in that** the threaded holes (7) are cylindrically formed.

## Revendications

1. Dispositif de serrage avec un châssis (2), un logement (4) situé sur une extrémité axiale du châssis (2) pour une pièce de montage devant être serrée et des moyens de serrage (5, 6) servant à fixer la pièce de montage dans le logement (4), le châssis (2) étant pourvu de plusieurs perçages taraudés (7) distribuées sur le pourtour du logement (4) dans lequel sont ou peuvent être vissées des vis de réglage (8) qui servent à l'ajustement d'une pièce de montage (W) serrée, les perçages taraudés axiaux (7) étant configurés comme des perçages traversant qui, espacés axialement d'une zone de serrage (4a) définie par les moyens de serrage (5, 6), aboutissent dans le logement (4) de sorte que les vis de réglage (8) vissées entrent en contact immédiat avec une pièce de montage (W), **caractérisé en ce que** les perçages taraudés (7) aboutissent, espacés axialement de la zone à mâchoire de serrage (4a), à l'extrémité interne axiale du logement (4).

2. Dispositif de serrage selon la revendication 1, **caractérisé en ce que** les perçages taraudés (7) sont distribués également sur le pourtour du logement (4).

3. Dispositif de serrage selon la revendication 2, **caractérisé en ce qu'** au total quatre perçages taraudés (7) sont disposés dans le châssis (2) avec un décalage de 90° l'un par rapport à l'autre.

4. Dispositif de serrage selon la revendication 2, **caractérisé en ce qu'**au total deux perçages taraudés diamétralement opposés sont disposés dans le châssis.

5. Dispositif de serrage selon l'une des revendications précédentes, **caractérisé en ce que** plusieurs perçages taraudés (7), et notamment au moins une paire de perçages taraudés diamétralement opposés, sont disposés dans le châssis (2) à la même hauteur axiale.

6. Dispositif de serrage selon l'une des revendications précédentes, **caractérisé en ce que** le châssis (2) est pourvu d'une douille expansible (5) qui définit sur sa longueur au moins un tronçon axial du logement (4) et qui est entourée d'une chambre de pression (6) dans laquelle peut être accumulée une pression visant à déformer vers l'intérieur la douille expansible (5) dans une section fine de paroi définissant la zone de serrage (4a), les perçages taraudés (7) dans le logement (4) aboutissant sur l'une des zones espacées de la section à paroi mince.

7. Dispositif de serrage selon la revendication 6, **caractérisé en ce que** les perçages taraudés (7) passent à travers une extrémité de la douille expansible avoisinant la section à paroi mince.

8. Dispositif de serrage selon la revendication 6, **caractérisé en ce que** la douille expansible (5) définit une section axiale du logement (4) et que les perçages taraudés (7) aboutissent dans une section du logement (4) axialement adjacente à la douille expansible (5).

9. Dispositif de serrage selon l'une des revendications précédentes, **caractérisé en ce que** les perçages taraudés (7) sont de forme cylindrique.
